# EUROPEAN PATENT SPECIFICATION

(11) **EP 2 667 303 B1**
(45) Date of publication and mention of the grant of the patent: **03.07.2019**
(21) Application number: 13168784.0
(22) Date of filing: 22.05.2013
(51) Int. Cl.: G06F 9/54, G06F 21/00

(54) **Methods, architectures and security mechanisms for a third-party application to access content in a cloud-based platform**
Verfahren, Architekturen und Sicherheitsmechanismen für eine Drittanwendung zum Zugriff auf Inhalt in einer Cloud-basierten Plattform
Procédés, architectures et mécanismes de sécurité pour une application tierce pour accéder à un contenu dans une plate-forme en Cloud

(30) Priority: 23.05.2012 US 201261650840 P; 31.05.2012 US 201261653876 P; 02.05.2013 US 201313886147; 19.05.2013 US 201313897421; 20.05.2013 US 201313898200; 20.05.2013 US 201313898242
(43) Date of publication of application: 27.11.2013
(73) Proprietor: Box, Inc., Los Altos, CA 94022 (US)
(72) Inventor: Smith, Michael Kollin, Los Altos, CA 94022 (US); Smith, Benjamin Campbell, Los Altos, CA 94022 (US); Tan, Simon, Los Altos, CA 94022 (US); Yao, Rico, Los Altos, CA 94022 (US)
(74) Representative: Mewburn Ellis LLP

(56) References cited:
- US-A1- 2009 150 417
- US-A1- 2010 306 379
- Anonymous: "Box (company)", Wikipedia, 18 May 2012 (2012-05-18), XP055206089, Retrieved from the Internet: URL:https://en.wikipedia.org/w/index.php?t itle=Box_(company)&oldid=493249772 [retrieved on 2015-08-04]

## Description

### BACKGROUND

With the advancements in digital technologies, data proliferation and the ever increasing mobility of user platforms which enable and encourage development of third-party applications have become ubiquitous in sectors of modem society, and as a result, data becomes shared across multiple sources as is use of third-party applications. This has become relevant with the increase of electronic and digital content being used in enterprise or social settings or shared environments of digital content compared to stand- alone personal computers and mobile devices.

However, to date, content sharing across multiple platforms using various application lacks the capabilities that provide the third-party applications with access to content or files stored in a workspace that is shared among multiple users in an intuitive and integrated manner.

US2010/0306379 discloses a marketplace system which can provide an interface to cloud management systems that allows the cloud management systems to specify desired computing resources and a value for providing those resources. The marketplace engine can provide the interface to third-party controlled systems to specify computing resources being offer to cloud computing systems. The marketplace engine can match the desired resources to the offers to provide computing resources and notify the cloud management systems and third-party controlled systems of the match. Additionally, the cloud management systems can utilize the marketplace to aid in valuing computing resources to be added to the cloud.

https://en.wikipedia.org/w/index.php?title=Box_(company)&oldid=493249772 is an online article which describes Box, an online file sharing and Cloud content management service for enterprise companies.

US2009/0150417 A1 discloses a system and method for integrating a plurality of web-based applications with a web-based file management system. The web-based application may provide a service to the users of the web-based file management system, such that the web-based application can interact with the files of said users. The integration of the service of the web-based application with the web-based file management system is achieved through a simple web interface to configure the service, without the developer of the web-based application having to change the application programming interface (API) of the application. The user of the web-based file management system may add services of a plurality of available web-based applications and use these services with one or more files that are stored on the web-based file management system.

The present invention provides a method as set out in claim 1. Further aspects of the present invention are set out in the remaining claims.

### BRIEF DESCRIPTION OF DRAWINGS

The present embodiments are illustrated by way of example and are not intended to be limited by the figures of the accompanying drawings. In the drawings:
FIG. 1 depicts an example diagram of a system having a host server of a cloud service, collaboration and/or cloud storage accounts with capabilities that enable a third-party application to access content within a cloud-based platform in an integrated manner;
FIG. 2 depicts an example diagram of a web-based or online collaboration platform deployed in an enterprise or other organizational setting for organizing work items and workspaces;
FIG. 3 depicts an example diagram of a workspace in an online or web-based collaboration environment accessible by multiple collaborators through various devices;
FIG. 4 depicts an example screenshot illustrating a user interface which enables a third-party application to access content within a cloud-based platform in an integrated manner;
FIG. 5 depicts an example screenshot illustrating another user interface which enables a third-party application to access content within a cloud-based platform;
FIG. 6 depicts a flowchart illustrating an example process for a third-party application to access content within a cloud-based platform in an integrated manner;
FIG. 7 depicts a flowchart illustrating another example process for a third-party application to access content within a cloud-based platform in an integrated manner;
FIG. 8 depicts a flowchart illustrating further details which can be adopted by the processes of FIG. 6 or FIG. 7 in accordance with some embodiments;
FIGS. 9A and 9B depict two flowcharts respectively illustrating two example processes which a mobile application of the cloud-based environment can perform so as to provide the file to the third-party application;
FIG. 10 depicts an example screenshot illustrating an user interface of the cloud-based platform;
FIG. 11 depicts an example screenshot illustrating a third-party application integrated with an interface that enables access to content within a cloud-based platform;
FIG. 12 depicts an example screenshot illustrating a list of approved third-party applications which can be authored by partnering entities;
FIG. 13 depicts a flowchart illustrating an example process which can be performed by a third-party application to gain access to content in a cloud-based environment;
FIG. 14 depicts a flowchart illustrating an example process which can be performed by a host server for providing the third-party application of FIG. 13 with access to content in a cloud-based environment;
FIG. 15 depicts a flowchart illustrating an example process which can be performed by a third-party application, through a third-party application server, to gain access to content in a cloud-based environment;
FIG. 16 depicts a flowchart illustrating an example process which can be performed by the third-party application server of FIG. 15 for providing the third-party application with access to content in a cloud-based environment; and
FIG. 17 depicts a diagrammatic representation of a machine in the example form of a computer system within which a set of instructions, for causing the machine to perform any one or more of the methodologies discussed herein, can be executed.

The same reference numbers and any acronyms identify elements or acts with the same or similar structure or functionality throughout the drawings and specification for ease of understanding and convenience.

### DETAILED DESCRIPTION

Techniques are disclosed for a third-party application to access content stored within a cloud-based platform or environment. In one embodiment, a method comprises, responsive to a request to access or edit a file received in the cloud-based environment, grant access or edit of the file using the third-party application. The third-party application includes a user interface which is customized to enable storage of the accessed or edited file to the cloud-based environment. In some embodiments, the third-party application is restricted to store the accessed file back to the cloud-based environment. Among other advantages, embodiments disclosed herein provide both accessibility of content within a cloud-based workspace to third-party applications and controllability over the manner of the third-party applications' accesses, thereby allowing the users to enjoy the benefit of freedom in choosing their own preferred programs from a wide-variety of third-party applications while maintaining or enhancing the security of the content stored within the cloud-based workspace.

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are, references to the same embodiment; and, such references mean at least one of the embodiments.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which can be exhibited by some embodiments and not by others. Similarly, various requirements are described which can be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms can be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way.

Consequently, alternative language and synonyms can be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles can be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions will control.

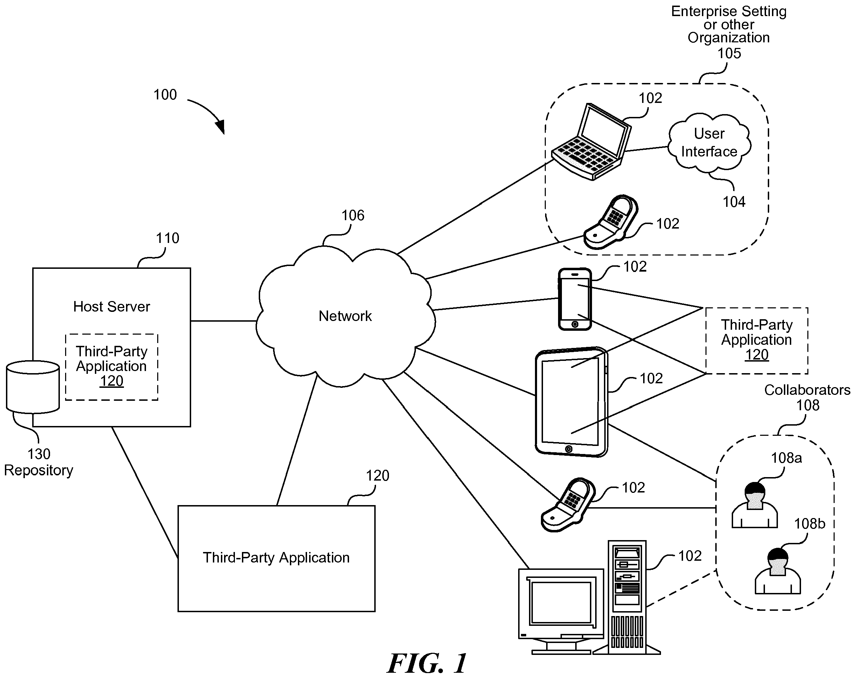

FIG. 1 illustrates an example diagram of a system 100 having a host server 110 of a cloud-based service/platform, collaboration workspace and/or cloud storage service with capabilities that enable that enable a third-party application to access content within a cloud-based platform in an integrated manner.

The client devices 102 can be any system and/or device, and/or any combination of devices/systems that is able to establish a communication or a connection, including wired, wireless, cellular connections with another device, a server and/or other systems such as host server 110 and/or a third-party application 120. Client devices 102 typically include a display and/or other output functionalities to present information and data exchanged between among the devices 102, the third-party application 120, and/or the host server 110.

For example, the client devices 102 can include mobile, hand held or portable devices or non-portable devices and can be any of, but not limited to, a server desktop, a desktop computer, a computer cluster, or portable devices including, a notebook, a laptop computer, a handheld computer, a palmtop computer, a mobile phone, a cell phone, a PDA, a smart phone (e.g., a BlackBerry device such as BlackBerry Z10/Q10, an iPhone, Nexus 4, etc.), a Treo, a handheld tablet (e.g. an iPad, iPad Mini, a Galaxy Note, Galaxy Note II, Xoom Tablet, Microsoft Surface, Blackberry PlayBook, Nexus 7, 10 etc.), a phablet (e.g., HTC Droid DNA, etc.), a tablet PC, a thin-client, a hand held console, a hand held gaming device or console (e.g., XBOX live, Nintendo DS, Sony PlayStation Portable, etc.), mobile-enabled powered watch (e.g., iOS, Android or other platform based), Google Glass, a Chromebook and/or any other portable, mobile, hand held devices, etc. running on any platform or any operating system (e.g., Mac-based OS (OS X, iOS, etc.), Windows-based OS (Windows Mobile, Windows 7, Windows 8, etc.), Android, Blackberry OS, Embedded Linux platforms, Palm OS, Symbian platform, Google Chrome OS, and the like. In one embodiment, the client devices 102, host server 110, and/or the third-party application 120 (e.g., a server hosting application 120) are coupled via a network 106. In some embodiments, the devices 102 and host server 100 and/or third-party application 120 may be directly connected to one another.

The input mechanism on client devices 102 can include touch screen keypad (including single touch, multi-touch, gesture sensing in 2D or 3D, etc.), a physical keypad, a mouse, a pointer, a track pad, motion detector (e.g., including 1-axis, 2-axis, 3-axis accelerometer, etc.), a light sensor, capacitance sensor, resistance sensor, temperature sensor, proximity sensor, a piezoelectric device, device orientation detector (e.g., electronic compass, tilt sensor, rotation sensor, gyroscope, accelerometer), or a combination of the above.

Signals received or detected indicating user activity at client devices 102 through one or more of the above input mechanism, or others, can be used by various users or collaborators (e.g., collaborators 108) for accessing, through network 106, a web-based collaboration environment or online collaboration platform (e.g., hosted by the host server 110). The collaboration environment or platform can have one or more collective settings 105 for an enterprise or an organization that the users belong, and can provide an user interface 104 for the users to access such platform under the settings 105.

The collaboration platform or environment hosts workspaces with work items that one or more users can access (e.g., view, edit, update, revise, comment, download, preview, tag, or otherwise manipulate, etc.). A work item can generally include any type of digital or electronic content that can be viewed or accessed via an electronic device (e.g., device 102). The digital content can include .pdf files, .doc, slides (e.g., Powerpoint slides), images, audio files, multimedia content, web pages, blogs, etc. A workspace can generally refer to any grouping of a set of digital content in the collaboration platform. The grouping can be created, identified, or specified by a user or through other means. This user may be a creator user or administrative user, for example.

In general, a workspace can be associated with a set of users or collaborators (e.g., collaborators 108) which have access to the content included therein. The levels of access (e.g., based on permissions or rules) of each user or collaborator to access the content in a given workspace may be the same or may vary among the users. Each user may have their own set of access rights to every piece of content in the workspace, or each user may be different access rights to different pieces of content. Access rights may be specified by a user associated with a workspace and/or a user who created/uploaded a particular piece of content to the workspace, or any other designated user or collaborator.

In general, the collaboration platform allows multiple users or collaborators to access or collaborate efforts on work items such each user can see, remotely, edits, revisions, comments, or annotations being made to specific work items through their own user devices. For example, a user can upload a document to a workspace for other users to access (e.g., for viewing, editing, commenting, signing-off, or otherwise manipulating). The user can login to the online platform and upload the document (or any other type of work item) to an existing workspace or to a new workspace. The document can be shared with existing users or collaborators in a workspace.

In general, network 106, over which the client devices 102 and the host server 110 communicate may be a cellular network, a telephonic network, an open network, such as the Internet, or a private network, such as an intranet and/or the extranet, or any combination or variation thereof. For example, the Internet can provide file transfer, remote log in, email, news, RSS, cloud-based services, instant messaging, visual voicemail, push mail, VoIP, and other services through any known or convenient protocol, such as, but is not limited to the TCP/IP protocol, Open System Interconnections (OSI), FTP, UPnP, iSCSI, NSF, ISDN, PDH, RS-232, SDH, SONET, etc.

The network 106 can be any collection of distinct networks operating wholly or partially in conjunction to provide connectivity to the client devices 102 and the host server 110 and may appear as one or more networks to the serviced systems and devices. In one embodiment, communications to and from the client devices 102 can be achieved by, an open network, such as the Internet, or a private network, such as an intranet and/or the extranet. In one embodiment, communications can be achieved by a secure communications protocol, such as secure sockets layer (SSL), or transport layer security (TLS).

In addition, communications can be achieved via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, WiFi, Fixed Wireless Data, 2G, 2.5G, 3G (e.g., WCDMA/UMTS based 3G networks), 4G, IMT-Advanced, pre-4G, LTE Advanced, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

Third-party applications 120 can be located from one or more third-party service application providing servers, and/or they can be provided by third-party software application vendors to run on the host server 110, either of which may be accessed over the network 106 (e.g., in forms of web-based applications). Third-party applications 120 can also be provided to the user directly and can be accessed at/from/via, installed, executed and run on the user devices 102. These three different configurations (or suitable combinations of which) are illustrated in FIG. 1 by way of example. In any of these configurations, the third-party applications 120 can communicate with the host server 110 for accessing cloud-based collaboration platform, storage and/or services in performing their functions.

The embodiments disclosed herein recognize that, with the growing prevalence of the communication networks (e.g., the Internet) and smart portable devices (e.g., smart phones), there are many third-party applications 120 that need access to a cloud-based collaboration service/platform, and/or cloud-based file and content storage services in order to best facilitate an intuitive and straightforward user experience,

For example, a user using a smart phone or a tablet computer may wish to run a third-party software application 120 (e.g., Google QuickOffice), to create or open a document, save the document back to a cloud-based collaboration and/or storage (e.g., cloud-based collaboration and/or storage services provided by Box, Inc., repository 130) and share it with a selected group of collaborators or in an enterprise including colleagues. One colleague as a reviewer may use another third-party software application 120 (e.g., Nuance Paperport) to annotate it, and another colleague may use yet another third-party software application 120 (e.g., Adobe Echosign) to sign the document, all accessing the same document on the cloud-based collaboration, interaction and/or storage services. For another example, a user of a third-party service application 120 (e.g., LinkedIn, Facebook or other application) may want to store his or her resume and/or other content on a user profile page provided by the third-party service application 120, which in turn would desirably store these files on a cloud-based environment/platform/services (e.g., collaboration and/or storage services) of the user.

However, whether it is for collaboration or for personal use or for both, existing techniques lack a user friendly, integrated way for the third-party applications and the users to enjoy a streamlined cloud-based environment/platform/services (e.g., collaboration, editing, sharing, and/or storage) experience without multiple uploading, downloading steps across multiple applications or devices which may further interrupt the user's work flow or potentially further risk a breach of security and/or privacy.

For example, some approaches lack the capability to provide the flexibility of using third-party applications to access content stored in the cloud-based workspace and the security assurances necessary toward such access, for example, in an enterprise setting where sensitive and/or confidential documents are often involved.

One way to provide access to content stored in a cloud-based collaborative environment is to allow the user and/or collaborators to download a copy of the content of interest (e.g., a file) so as to create a local copy of the file (e.g., on one of the user devices 102). Then, the user can use a suitable third-party application (e.g., which may be installed on the user device 102 as an application, or may be provided as a web browser plug-in that can access the application via the browser) of his or her own preference to access, view, edit, or otherwise modify the file.

However, this approach relinquishes access control over the file by simply allowing the file to be downloaded and copied without technical restrictions; it puts heavy reliance on the user and/or the third-party application to store back the file to the cloud-based platform, to control the access to the local copy of the file, and to delete any copies created for/during the access.

To overcome the above-mentioned drawbacks, one way is to provide access to a cloud-based collaborative environment is for a provider (e.g., who hosts the host server 110) of the cloud-based environment to also provide integrated editing tools, typically in forms of web-based applications (e.g., accessible via a web browser). However, this approach provides security and access controllability at the expense of flexibility; indeed, the users are forced to accept and use whichever applications or tools developed and/or deployed by the cloud service provider. Oftentimes, functionalities of these tools are simple and can be limited as compared to other third-party applications that are professionally developed.

Accordingly, embodiments of the present disclosure provide systems and methods that provide techniques for a third-party application to access content stored within a cloud-based platform or environment in an integrated, secure manner. In accordance with some embodiments, a system (e.g., host server 110, or user devices 102) implementing the techniques disclosed herein is provided that enables (e.g., through a software framework, an application programming interface, a software library, and/or an agent application) the third-party application 120 to connect to the host server 110 which hosts the cloud-based platform for accessing content that is stored in the cloud (e.g., in cloud repository 130).

In some embodiments, when a user desires to access content (e.g., a file) stored in the cloud-based platform using the third-party application 120, the user can first select to access the file in the cloud-based platform. For example, the user can utilize a user interface 104 (e.g., in forms of a mobile application installed on user devices 102, or in forms of webpages accessible by a browser) of the cloud-based environment to select the file of his or her interest. For purposes of discussion, assume the user interface 104 is provided through a mobile application. Then, when the user selects the file in the user interface 104 for accessing (e.g., for viewing, editing, signing, etc.), the mobile application can prompt the user to choose which third-party application 120 that he or she desires to use. Thereafter, the user devices 102 launches the third-party application 120, which can communicate with the mobile application so that the third-party application 120 can access the file through the mobile application. Some embodiments provide that the third-party application 120 is launched on the user devices 102 using a controlled launching interface that is different from an application launching interface provided by an operating system of the user devices 102.

More specifically, according to some implementations, the mobile application can handling authentication, navigation and upload/download of the file(s) of the user's interest. From one practical standpoint, the mobile application reduces the necessary effort for a developer of the third-party application 120 to build out the functionality and user interface for accessing the cloud-based platform/environment/workspace. From another practical standpoint, the controlled launching interface also provides a convenient means for the developers of the third-party applications 120 to advertise their software.

The users viewing files in the cloud-based environment (e.g., via user interface 104 as provided by the mobile application) can browse, install, choose, select, and/or operate third-party applications 120 (e.g., via the controlled launching interface) that incorporate the software library or framework that implements the disclosed techniques. The controlled launching interface can further filter the selection based on the type of file the user is trying to access. Among others, by providing a consistent user interface and level of security across the third-party applications 120 accessing the cloud-based platform, the software library or framework which implements the techniques disclosed herein provides flexibility to the user in choosing own preferred third-party applications 120, improves user experience, and reduces administrative burdens of those information technology (IT) personnel.

It is noted that the aforementioned embodiments with respect to the mobile application and/or the software library/framework are merely some aspects of the present disclosed techniques. More implementation details regarding the host server 110 and the third-party application 120 are discussed below.

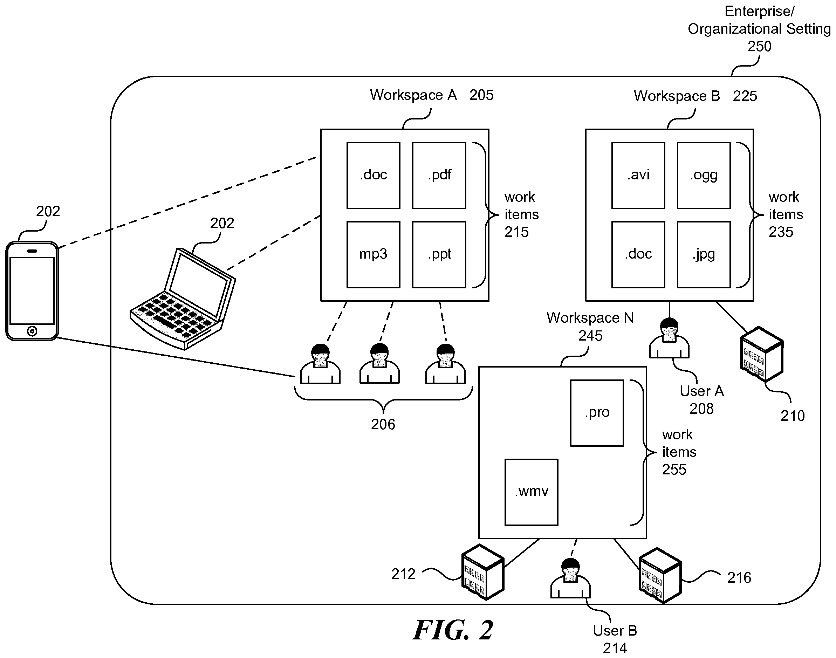

FIG. 2 depicts an example diagram of a web-based or online collaboration platform deployed in an enterprise or other organizational setting 250 for organizing work items 215, 235, 255 and workspaces 205, 225, 245.

The web-based platform for collaborating on projects or jointly working on documents can be used by individual users and shared among collaborators. In addition, the collaboration platform can be deployed in an organized setting including but not limited to, a company (e.g., an enterprise setting), a department in a company, an academic institution, a department in an academic institution, a class or course setting, or any other types of organizations or organized setting.

When deployed in an organizational setting, multiple workspaces (e.g., workspace A, B C) can be created to support different projects or a variety of work flows. Each workspace can have its own associate work items. For example, workspace A 205 can be associated with work items 215, workspace B 225 can be associated with work items 235, and workspace N can be associated with work items 255. The work items 215, 235, and 255 can be unique to each workspace but need not be. For example, a particular word document can be associated with only one workspace (e.g., workspace A 205) or it can be associated with multiple workspaces (e.g., Workspace A 205 and workspace B 225, etc.).

In general, each workspace has a set of users or collaborators associated with it. For example, workspace A 205 is associated with multiple users or collaborators 206. In some instances, workspaces deployed in an enterprise can be department specific. For example, workspace B can be associated with department 210 and some users shown as example user A 208 and workspace N 245 can be associated with departments 212 and 216 and users shown as example user B 214.

Each user associated with a workspace can generally access the work items associated with the workspace. The level of access depends on permissions associated with the specific workspace, and/or with a specific work item. Permissions can be set for the workspace or set individually on a per work item basis. For example, the creator of a workspace (e.g., one of user A 208 who creates workspace B) can set one permission setting applicable to all work items 235 for other associated users and/or users associated with the affiliate department 210, for example. Creator user A 208 can also set different permission settings for each work item, which can be the same for different users, or varying for different users.

In each workspace A, B... N, when an action is performed on a work item by a given user or any other activity is detected in the workspace, other users in the same workspace can be notified (e.g., in real time or in near real time, or not in real time). Activities which trigger real time notifications can include, by way of example but not limitation, adding, deleting, or modifying collaborators in the workspace, uploading, downloading, adding, deleting a work item in the workspace, creating a discussion topic in the workspace.

In some embodiments, items or content downloaded or edited can cause notifications to be generated. Such notifications can be sent to relevant users to notify them of actions surrounding a download, an edit, a change, a modification, a new file, a conflicting version, an upload of an edited or modified file.

In one embodiment, in a user interface to the web-based collaboration platform where notifications are presented, users can, via the same interface, create action items (e.g., tasks) and delegate the action items to other users including collaborators pertaining to a work item 215, for example. The collaborators 206 can be in the same workspace A 205 or the user can include a newly invited collaborator. Similarly, in the same user interface where discussion topics can be created in a workspace (e.g., workspace A, B or N, etc.), actionable events on work items can be created and/or delegated/assigned to other users such as collaborators of a given workspace 206 or other users. Through the same user interface, task status and updates from multiple users or collaborators can be indicated and reflected. In some instances, the users can perform the tasks (e.g., review or approve or reject, etc.) via the same user interface.

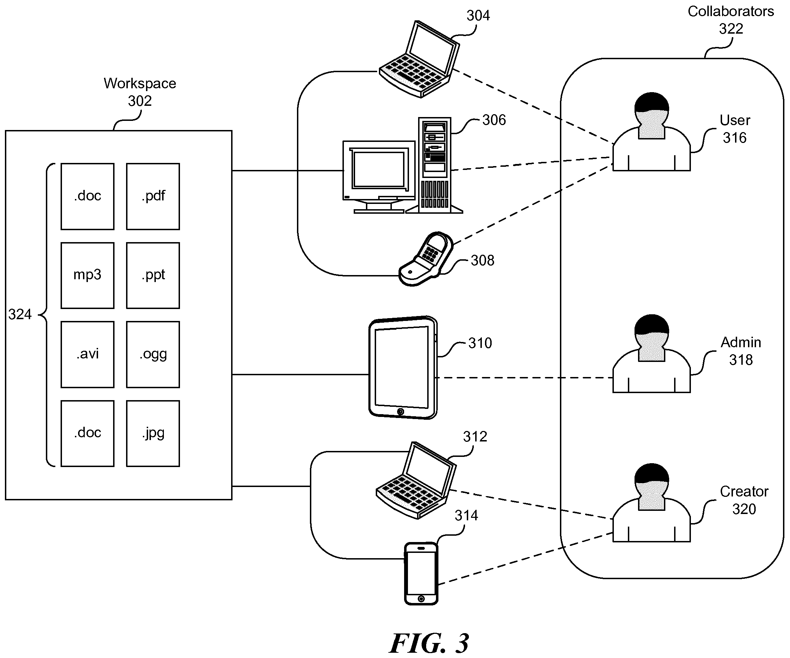

FIG. 3 depicts an example diagram of a workspace 302 in an online or web-based collaboration environment accessible by multiple collaborators 322 through various devices.

Each of users 316, 318, and 320 can individually use multiple different devices to access and/or manipulate work items 324 in the workspace 302 with which they are associated with. For example users 316, 318, 320 can be collaborators on a project to which work items 324 are relevant. Since the work items 324 are hosted by the collaboration environment (e.g., a cloud-based environment), each user can access the work items 324 anytime, and from any physical location using any device (e.g., including devices they own or any shared/public/loaner device).

Work items to be edited or viewed can be accessed from the workspace 302. Users can also be notified of access, edit, modification, and/or upload related-actions performed on work items 324 by other users or any other types of activities detected in the workspace 302. For example, if user 316 modifies a document, one or both of the other collaborators 318 and 320 can be notified of the modification in real time, or near real-time, or not in real time. The notifications can be sent through any of all of the devices associated with a given user, in various formats including, one or more of, email, SMS, or via a pop-up window in a user interface in which the user uses to access the collaboration platform. In the event of multiple notifications, each notification can be depicted preferentially (e.g., ordering in the user interface) based on user preferences and/or relevance to the user (e.g., implicit or explicit).

For example, a notification of a download, access, read, write, edit, or uploaded related activities can be presented in a feed stream among other notifications through a user interface on the user device according to relevancy to the user determined based on current or recent activity of the user in the web-based collaboration environment.

In one embodiment, the notification feed stream further enables users to create or generate actionable events (e.g., as task) which are or can be performed by other users 316 or collaborators 322 (e.g., including admin users or other users not in the same workspace), either in the same workspace 302 or in some other workspace. The actionable events such as tasks can also be assigned or delegated to other users via the same user interface.

For example, a given notification regarding a work item 324 can be associated with user interface features allowing a user 316 to assign a task related to the work item 324 (e.g., to another user 316, admin user 318, creator user 320 or another user). In one embodiment, a commenting user interface or a comment action associated with a notification can be used in conjunction with user interface features to enable task assignment, delegation, and/or management of the relevant work item or work items in the relevant workspaces, in the same user interface.

Now, with reference to both FIGS. 1 and 3, techniques for a third-party application to access content stored within a cloud-based platform or environment in an integrated, secure manner are described in fuller detail.

As previously mentioned, when user 316 or his/her collaborators 322 desire to access content (e.g., a work item 324) stored in the workspace 302 using a third-party application (e.g., application 120, FIG. 1), the user 316 can send a request to access the work item 324 by first selecting to open the file in workspace 302 using a user interface (e.g., interface 104, FIG. 1) of the workspace 302. According to some embodiments, the user interface 104 is provided via a mobile application, which can be installed on user devices 304-314. In some other embodiments, the user interface 104 is web-based and is accessible by a web browser on user devices 304-314.

In some of those embodiments that include the mobile application, the selected work item 324 is downloaded to the user devices 304-314, and the mobile application has access control over the downloaded work item 324. For example, the mobile application can store the work item 324 on the device or in a memory space (e.g., a cache, a RAM, or a Flash memory) on the devices 304-314, and limits access to the device or the memory space that stores the work item 324 so as to prevent unauthorized reading of, editing to, or modifying of the work item 324. Unauthorized access can include an access from any application not using an application programming interface (API) or a software library/framework that is provided the provider of workspace 302, and/or an access not granted or otherwise controlled by the mobile application. Alternatively, the mobile application can directly access the work item 324 in workspace 302 by temporarily caching the at least partially download file that includes the content of work item 324, a well-known technique that can also be employed in some of those embodiments where the user interface 104 is web-based.

Additionally, the mobile application can launch the third-party application 120 using a controlled launching interface that is different from an application launching interface provided by an operating system of the user devices 304-314 so that additional functionalities can be provided. In some embodiments, the mobile application can prompt (e.g., via the controlled launching interface) the user to select which third-party application the user wishes to use for accessing or content editing. The selection prompted can include, for example, a plurality of applications already installed on user devices 304-314, and/or can include one or more suggested applications for the user to download and install. Further, the selection can be based on a type (e.g., a documentation (.doc), a presentation slide (.ppt), or a video clip (.avi)) of the work item 324 that the user currently selects for accessing.

Then, the mobile application provides (e.g., in response to a request sent by the launched third-party application 120 via the provided API or the software library/framework, or automatically as a part of the controlled launching mechanisms of the user interface 104) the file to the third-party application 120 for one or more actions (e.g., accesses or edits) to be performed on the file by the third-party application 120, and in the meantime, the mobile application also restricts the third-party application 120 to store the accessed file or content back to the workspace 302. In some embodiments, the mobile application restricts the third-party application 120 by an operating system (OS) level hook, or the API/software library/framework restricts the third-party application 120 so that any sharing or saving mechanisms of the third-party application 120 other than storing back to the workspace 302 is prohibited. For purposes of discussion herein, a "software hook" or "hooking" includes various suitable techniques known to a person having ordinary skill in the art to alter or augment the behavior of the OS and of the third-party applications 120 by intercepting function calls or messages and/or events passed between components of the OS and the third-party applications 120.

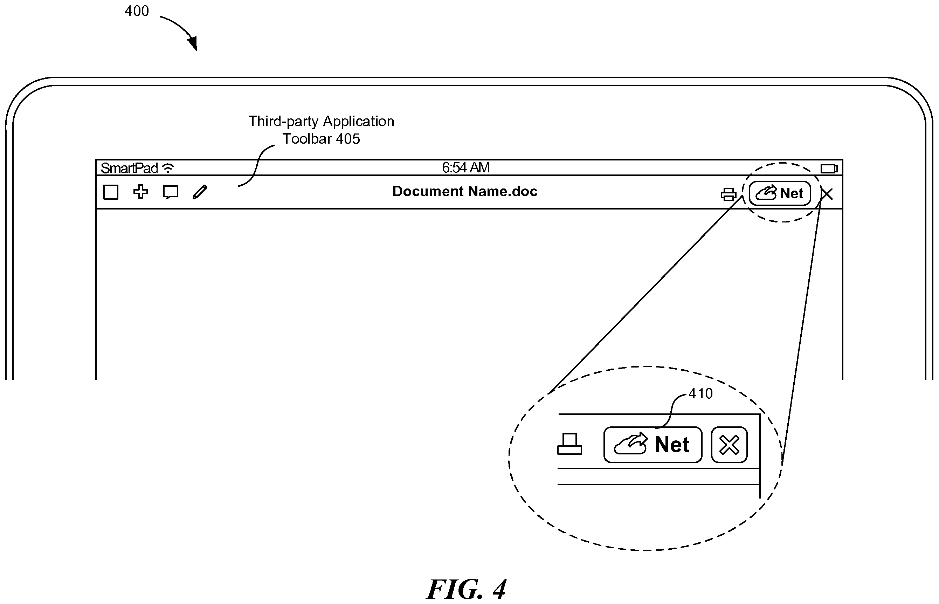

Further, in some embodiments, the third-party applications 120 include a user interface which is customized to enable storage of the accessed file (e.g., work item 324) back to the cloud-based environment (e.g., workspace 302). One example of this customized user interface which enables the third-party application 120 to store back accessed content to the workspace 302 is illustrated in FIG. 4, which includes a partial screenshot 400 of the third-party application 120. The third-party application shown in FIG. 4 includes a third-party application toolbar 405, which in turn includes a designated, selectable button 410 to enable the store back. In some implementations, the toolbar 405 is customized so that no other navigation or option (e.g., save locally, save to another location, or share via email, etc.) is available. In some implementations, the third-party application is provided in a customized view, and the customized view constrains the third-party application 120 to save the content back to the workspace 302.

After the user accesses or edits the work item 324 using the third-party application 120 (e.g., provided in a customized view, and/or with a customized toolbar 405), and after the user selects the designated button 410, the mobile application retrieves the work item 324 from the third-party application 120. Additionally, all the metadata, for example, tags or other data which characterize the work item 324 such as who the author and collaborators are, or version histories, are retrieved back along with the work item 324. The metadata can also include information about the file or work item 324's location and its storage in the cloud-based platform (such as workspace 302 provided by the host server 110) including, for example, folder identifier (ID), file ID, folder path to the file, file name, folder name and/or any other identifying information. Additionally, the metadata can include information about how to control the data for security purposes including, for example, whether the file or the work item 324 can be stored in the third-party application 120, or whether the file or work item 324 needs to be sent back to the workspace 302 immediately without leaving any temporary or cache copies. Another example of such information is whether the file can be shared out to other third-party applications. In some embodiments, copies created by the third-party application 120 during the access, if any, are deleted after the edited or accessed work item 324 is retrieved (e.g., based on the information contained in metadata). According to one or more embodiments, the retrieval is performed using the software library provided by the provider of workspace 302.

After the mobile application retrieves the work item 324, it can manage the upload back to a host server (e.g., host server 110, FIG. 1) which hosts the workspace 302. For example, the mobile application can open an upload dialog view pointing a folder the user originally stores the work item 324. The user then selects upload, and the work item 324 is stored back to the workspace 302 through the mobile application. In some embodiments, the mobile application can determine whether the server 110 is accessible. If the server 110 is determined accessible, then the mobile application transmits the retrieved work item 324 to the server, and deletes the memory space on the user devices 304-314 that originally stores the work item 324. If the server 110 is determined inaccessible, then the mobile application retains the retrieved work item 324 from the device or in the memory space of the device until the server 110 becomes accessible.

In this way, the mobile application implementing the techniques disclosed herein acts as a mediator between the workspace 302 and the third-party applications 120, manages uploads and downloads, and ensures that file transfer happens securely through the software API/library/framework provided by the provider of workspace 302. As said above, the disclosed techniques grants the third-party applications 120 access to content of the cloud-based platform and ensures security by providing no sharing or saving mechanism other than storage back to the cloud-based platform to the third-party application 120. The disclosed techniques also include deletion of files on user devices 304-314 once the files are retrieved and transferred back to the cloud-based platform. Also, since upload management such as all uploading activities, errors, and retries are controlled and performed by the mobile application, developers of the third-party applications 120 can benefit from the reduced workload in designing such uploading functionalities.

In another aspect of the present disclosure, the disclosed techniques include providing the third-party application 120 with access to the cloud-based collaborative environment (e.g., workspace 302) where the third-party application is provided to the users as a web-based application (e.g., accessible via a web browser). The third-party application can be running on the host server 110 or on a separate third-party application server.

In some embodiments, a system implementing the disclosed techniques can, responsive to a request to access or edit a work item 324 in the workspace 302, grant access of the work item 324 to the third-party application 120. The request of access or edit of the file is from any one of a collaborator 322 of the file. The third-party application 120 can include a user interface (e.g., toolbar 405, FIG. 4) which is customized to enable storage of the accessed or edited work item 324 to the cloud-based environment such as workspace 302.

More specifically, in some embodiments, the third-party application 120 is integrated with the workspace 302 such that the work item 324 accessed or edited using the third-party application 120 through the workspace 302 is restricted to be stored back to the workspace 302 after the access or edit. In one or more embodiments, the work item 324 is retrieved, from the third-party application 120 after the work item 324 is accessed or edited, to be viewed via a web application to the workspace 302. The storage of the accessed or edited file (or work item 324) to the cloud-based environment (or workspace 302) includes metadata.

Moreover, according to some embodiments, after the access or the edit using the third-party application 120, the work item 324 is uploaded to the cloud-based workspace 302 for storage. During or after the access or the edit of the file using the third-party application 120, sharing or saving mechanisms of the third-party application 120 is prohibited by the cloud-based environment.

In some examples, copies of the file not stored in the cloud-based environment after the access or the edit are deleted. Additionally or alternatively, the cloud-based environment can manage uploads of files accessed and edited using the third-party application 120 back to the cloud-based environment. In some examples, the cloud-based environment can also manage error handling of file access or file edits using the third-party application 120.

Further, in some embodiments disclosed herein, the third-party application can be selected by the user of the cloud-based environment among multiple third-party applications available for selection in the cloud-based environment. In addition, the third-party application 120 can be authored by a partnering entity of the provider of the cloud-based platform. In a mutually beneficial manner, those third-party applications which adhere to guidelines and/or policies in implementing secured access of the cloud-based platform (e.g., by using API/software library/software framework as provided by the cloud service provider) can get promoted or advertised by the provider of such cloud-based platform. As an option, the third-party application 120 can be provided within a view (e.g., similar to the interface as shown in FIG. 4) which constrains the third-party application 120 to save the content back to an original location of the file.

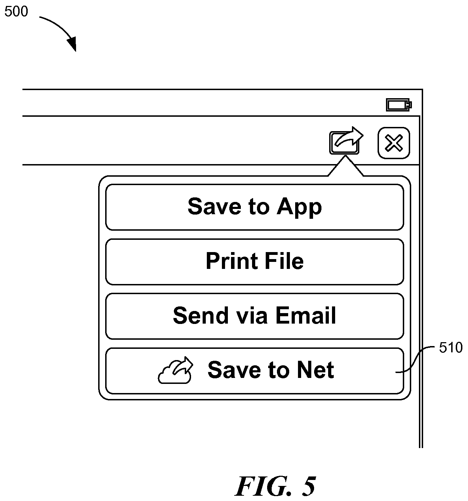

In yet another aspect of the present disclosure, an option is provided in a user interface of the third-party application 120 for accessing the cloud-based platform. An example of such option is illustrated as option 510 in screenshot 500 of FIG. 5. As shown in FIG. 5, the user interface of third-party application 120 is customized to include the option 510 to save content accessed using the third-party application 120 to the cloud-based platform. In response to activation of the option, the mobile application receives the file from the third-party application 120 (e.g., which is installed on user devices as a mobile application or is provided as a web-based application). This technique is especially useful in those embodiments where the user interface 104 is provided via the mobile application (such as the one described above), and when the user desires to edit and upload a local file to the cloud-based platform such as workspace 302 in an integrated, secure manner. In some of these embodiments, the mobile application manages the uploading the file to the cloud-based platform (e.g., determining whether a server hosting the cloud-based platform is accessible and corresponding actions in response to results from the determination) in a similar manner described above.

Additionally, in some embodiments, if the option is selected by the user, and yet the mobile application is not installed on the user's device, then a link is populated or presented to the user to prompt the user to install the mobile application so that the uploading can be handled.

Depending on the application, in some alternative embodiments, the user interface of the third-party can still limit the third-party application 120 to save the content accessed using the third-party application 120 to the workspace 302 or a server hosting the third-party application 120. In some implementations, the user interface prevents sharing of the content accessed using the third-party application besides saving the content. The user interface of the third-party application can be customized using tools provided by the cloud-based platform. Additionally or alternatively, the third-party application is provided within a view by the cloud-based environment, and the view constrains the third-party application to save the content back to an original location of the file.

In an additional aspect of the present disclosure, another configuration of the third-party application 120 can be adopted which can further enhance information security of the work item 324. In this configuration, the third-party application 120's normal operations involve the third-party application 120 operating on, for example, the user devices 304-314, and a server being associated with the third-party application 120 (or a "third-party application server") to supply or supplement data/information that facilitates the normal operations of the third-party application 120. In some embodiments, the server associated with the third-party application 120 is operated by a vendor or an author entity of the third-party application 120.

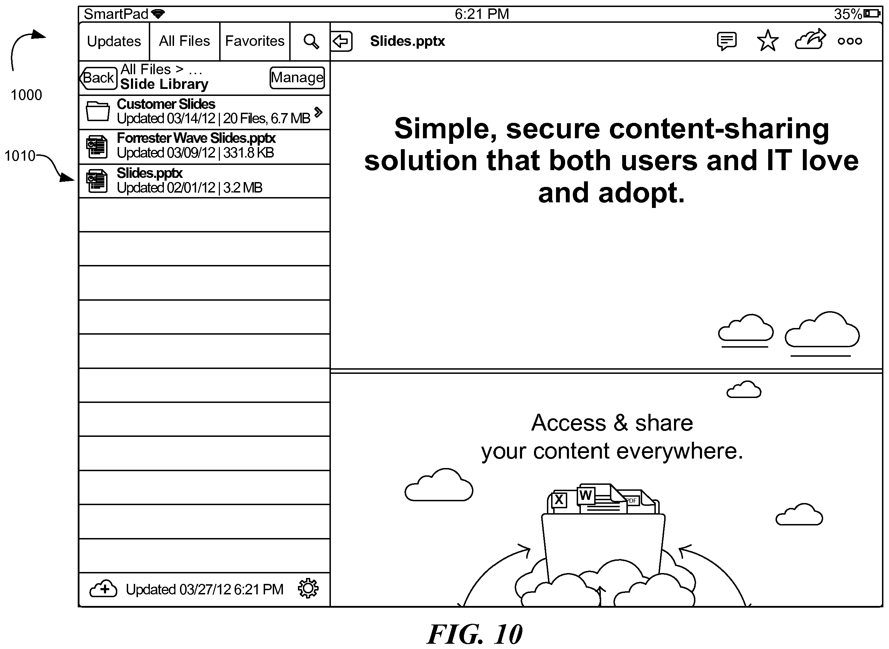

In some of the embodiments, when user 316 or his/her collaborators 322 desire to access content (e.g., a work item 324) stored in the workspace 302 using a third-party application (e.g., application 120, FIG. 1), the user 316 can first select to open the file or work item 324 in workspace 302 using a user interface (e.g., interface 104, FIG. 1) of the workspace 302. Similar to some embodiments described above, the user interface 104 can be provided via a mobile application, or can be web-based and accessible by a web browser on user devices 304-314. An example of such user interface 104 that is provided via the mobile application is illustrated in screenshot 1000 of FIG. 10.

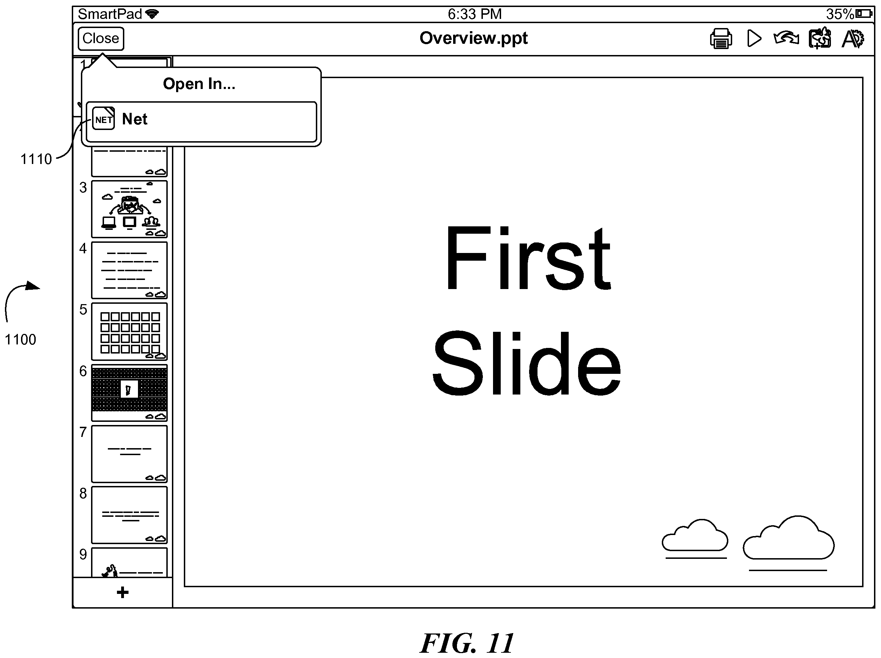

Then, when the user selects the file in the user interface 104 (e.g., via one or more tapping on file 1010, FIG. 10) for accessing (e.g., for viewing, editing, signing, etc.), the mobile application can prompt the user to choose which third-party application 120 that he or she desires to use. Thereafter, the user devices 102 launches the third-party application 120 (e.g., application 1100 shown in FIG. 11), which can communicate with the third-party application server and the host server 110 so that the third-party application 120 can access the work item 324 through the third-party application server.

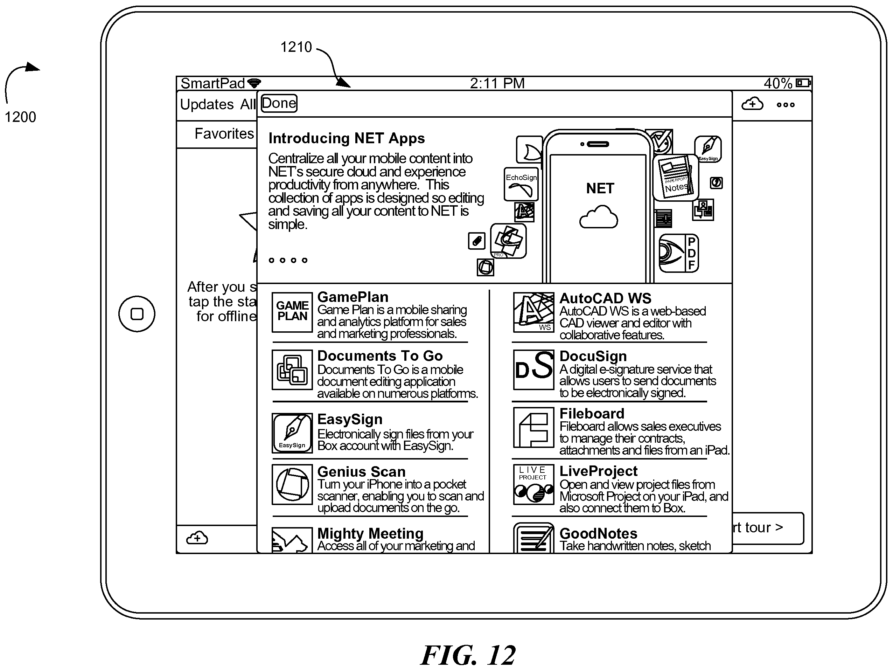

According to one or more embodiments, the third-party application 120 is listed in a list of approved third-party applications. Some embodiments provide that the third-party application 120 is launched on the user devices 102 using a controlled launching interface that is different from an application launching interface provided by an operating system of the user devices 102. In one or more embodiments, if such approved third-party application 120 is not currently installed on the user device 304-314, then at least a portion of the list of approved third-party applications can be populated in the controlled launching interface (or, alternative or additionally, in another separate interface, e.g., an application store as provided by the OS of device 304-314, or an application gallery which can be provided by the third-party application 120) for downloading. An example of such application gallery containing approved third-party applications is illustrated in a screenshot 1200 of FIG. 12 as interface 1210.

Upon the user's selection, the mobile application (which can be also referred to as a "mobile client" herein) sends metadata that identifies the work item 324 to the third-party application 120. After receiving the metadata from the mobile application, the third-party application 120 transmits the metadata to the third-party application server, which in turn utilizes those metadata to request the work item 324 from the host server 110. That is to say, the third-party application server can request the work item 324 from the host server 110 by transmitting the metadata to the host server 110.

Next, the host server 110 returns the requested work item 324 as identified by the metadata to third-party application server. After receiving the requested work item 324 from the host server 110, third-party application server communicates with and/or renders information to the third-party application 120. More specifically, the third-party application server transmits at least a portion of the file or work item 324 to the third-party application 120 for one or more actions to be performed on the portion of the work item 324. In some embodiments, the part of the work item 324 received by the third-party application 120 includes information that is capable to create a view of at least a partial content of the work item 324. For example, the information can be capable to generate several views of a PDF file, a first few slides of a Powerpoint presentation, a number of pages of a Word document, and so forth. In some embodiments, the part of the work item 324 received by the third-party application 120 includes data that are included the file. Some embodiments of the third-party application server is to transmit the entire file instead of a portion of the file.

After the access, the third-party application 120 transmits the work item 324 back to the third-party application server. In some alternative embodiments, the third-party application 120 transmits only an accessed portion of the work item 324 back to the third-party application server to conserve network resources. The third-party application receives the accessed portion of the work item 324 from the third-party application 120, and saves the accessed file or content back to the host server 110.

The third-party application 120 can also launch/awake/switch to the mobile application and notifies the mobile application to reload the work item 324 from the host server 110.

As a part of the security enhancing features, the third-party application 120 can receive an instruction from the cloud-based environment (e.g., from the host server 110) to delete the received part of the work item 324. In another example, the third-party application 120 may be restricted the to store the received content back to the cloud-based environment. In some embodiments, the third-party application server can keep a history of the access. The history can includes information regarding, for example, which third-party application accessed what content through what method from what location at what time.

As additional or alternative embodiments, upon returning to the third-party application 120, the mobile application can prompt user 316 when it is about to discard previously opened content. More specifically, when user 316 works on a file passed from the mobile application of the cloud-based environment and subsequently exits the third-party application 120 without saving or closing the edit view, if the user 316 returns to the third-party application 120, the mobile application can allow the user 316 to continue editing. For example, activating "close" (e.g., button 1110, FIG. 11) from this view can either return to the mobile application (e.g., shown in screenshot 1000, FIG. 10) or return to a main view (not shown for simplicity) of the third-party application 120. If the user 316 opens another file from the mobile application, the user 316 is to be prompted on whether or not to discard the previously worked-on file or content.

In still another aspect of the present disclosure, among others already mentioned above, some additional or alternative methods and apparatuses can provide a third-party application with access to content in a cloud-based environment without the need of having a mobile application (or a mobile client) installed on the user devices 304-314. According to some embodiments, a mobile application framework/API/library can enable the third-party application 120 to directly access (e.g., opens, edits, saves back, etc.) the work item 324 in a cloud-based environment such as workspace 302.

It is noted that the third-party application 120 is hosted by an entity different from that of the cloud-based environment, and the direct access to the content in the cloud-based environment is provided to the third-party application 120 and accomplished without a need to access an application (e.g., the mobile application/mobile agent) that is native to the cloud-based environment. The direct access to the content includes direct save of the content to or retrieval of the content from the cloud-based environment. Other examples of the direct access to the content can include, but not limited to, previewing the content in the cloud-based environment, collaborating on the content in the cloud-based environment among multiple collaborators of the user. In some embodiments, the direct access is provided through a web interface of the third party application. In some other embodiments, the direct access is provided through integration of the third-party application with an application program interface (API) or web API provided by the cloud-based environment. The application program interface or the web API can be further used for one or more of navigation, file management, file transfer, collaboration in the cloud-based environment, and/or for caching in the cloud-based environment.

Generally speaking, the embodiments of third-party application 120 that implement these direct-access techniques, which can be authored by a "partnering entity," are better written applications in terms of quality and/or functionality, and they generally have a more complete, secure integration (in various manners that are discussed herein including, for example, remote delete, or limited saving/sharing mechanisms, etc.) with the workspace 302. These applications may be endorsed and put on a list of approved third-party applications. Further, they may be populated or advertised using the controlled launching interface or a separate downloading interface as above described.

For example, some of these third-party application 120 (e.g., application 1100 shown in FIG. 11) can bring the benefit of convenience and security by making the user experience simple to edit files using a mobile device. Those changes made from the mobile device can be saved back to workspace 302 automatically. As mentioned, workspace 302 can also enable the user 316 (and collaborators 322) to add annotations to important documents, highlight and make notes on work items 324, and/or save back to workspace 302 so that all collaborators 322's work progresses are aligned.

More specifically, to access the work item 324 in the workspace 302, the third-party application 120 can transmit a request to the host server 110. In some embodiments, a vendor of the third-party application 120 can, for example, pre-register with the host server 110 so that an API key that identifies the third-party application 120 (or the vendor of the application 120) can be received.

During third-party application 120's normal operation, application 120 can use the API key to first request from the host server 110 a ticket. For one example, the third-party application 120 can make the following API call:
*GET https:llwww.box.com*/*api*/*1.0*/*rest?action*=*get_ticket&api_key*=*{API KEY}*
and the third-party application 120 may receive from the host server 110, for example, an XML response that contains the ticket.

In one or more embodiments, the ticket automatically expires after a predetermined amount of time, for example, 10 minutes. After receiving the ticket, the third-party application 120 then makes the request, which includes the ticket, to the host server 110 for a login view.

In response to such request, the host server 110 can provides the third-party application 120 with the login view to verify an identity of a user. The login view is generated from the host server 110. For example, the third-party application 120 can include a login view controller which embeds a web view and handles the whole login process. In one embodiment, the provided login view is embedded in an interface of the third-party application 120.

Further, in some embodiments, the login view is provided based on whether the user is logged into the cloud-based environment. According to some embodiments, the login view is provided if the user is not logged into the workspace 302.

Then, upon the verification of the user's identity, the host server 110 provides the requested work item 342 to the third-party application 120. In some embodiments, to further security, when the host server 110 determines that it is the third-party application 120 which sends out the request, the host server 110 only responds to such request if the third-party application 120 is listed in a list of approved third-party applications.

Additionally or alternatively, the host server 110 further transmits an authentication token to the third-party application 120 after the user's identity is verified. In some embodiments, the workspace 302 is encrypted, and the authentication token includes a decryption key to decrypt the workspace 302. Some examples of such encryption/decryption algorithms include AES, DES, as well as other suitable cryptologic algorithms. Some implementation of the authentication token can automatically expire after a certain period of time, which may be predetermined, and/or may be dynamically and automatically selected. In some embodiments, the authentication token does not expire over time, and the third-party application 120 can therefore store the authentication token for future use, so that user 316 only needs to authenticate with the third-party application 120 once. The authentication tokens can be deleted, for example, when user 316 "logs out", when re-authenticating a user, or when the user removing the third-party application 120 manually.

The third-party application 120 can store the authentication token in a "keychain" or other suitable, secure storage after receiving the authentication token. Then, either the host server 110 or the third-party application 120 or both can detect presence of the authentication token that is previously sent and still valid. In some embodiments, the login view is not generated again by the host server 110 if, upon receiving a subsequent request from the application 120 to access the workspace 302, the authentication token is present on the third-party application 120.

In manners similar to those already discussed above, some embodiments of the third-party application 120 has a user interface customized to enable storage of the accessed content back to the cloud-based environment. Moreover, in one or more embodiments, the third-party application 120 is listed in a list of approved third-party applications.

Further, the host server 110 can keep a history of the access, such as information regarding which third-party application accessed what content. The third-party application can also receive an instruction from the cloud-based environment to delete the received content (e.g., work item 324). The third-party application 120 is restricted to store the received work item 324 back to the workspace 302.

Overall, among other features, the third-party application 120 provides independent encryption of the files in the mobile application (or mobile client) of the workspace 302 and/or the third-party application 120. It can support remote wipe and logout to ensure content downloaded (if any) from the workspace 302 can be removed if so desired. Some embodiments also provide that only a specified list of trusted (e.g., approved by administrator) applications can access the cloud-based workspace 302. The administrator can also specify from which devices 304-314 user 316 can access the workspace 302. The host server 110 can provide audit trail to track which third-party applications 120 and/or user 316 accessed what content. Data leakage can be prevented by, in some embodiments, only allowing sharing and collaboration through the mobile application of the workspace 302 or an approved third-party application 120. With the embodiments disclosed herein, security audits or reports can be generated (e.g., from those tracking histories) by either the third-party application 120 or the host server 110 for administrative reviews. Administrators can oversee devices 304-314 and installed third-party applications 120 remotely.

In some embodiments, the third-party applications 120 can further set tiers for its users based on one or more suitable criteria. For example, if a partnering third-party application 120 (or an approved application) does not require certain security or user interface functionality for free users, the application 120 can still provide those additional functionalities or can selectively enforce those security restrictions for paid customers (e.g., employees whose employers pay for the software) if applicable administrators set so.

In this way, the users can enjoy the flexibility in selecting the third-party applications they so prefer, which potentially enables the users to perform a wider variety of tasks on the files from a location and/or a device of their preference. Also, because the files are stored and managed and/or controlled in the cloud-based platform, business enterprise users or administrators can also enjoy the security assurances from having unified, standardized, and integrated access controls over content stored in the cloud-based platform.

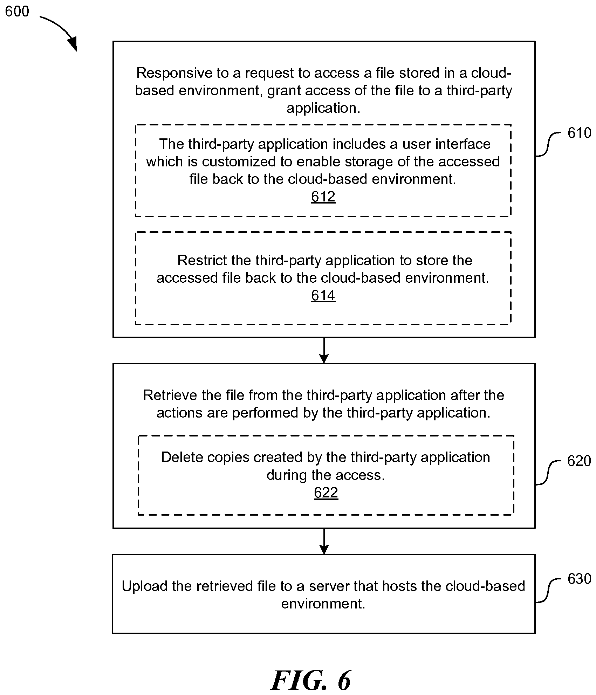

FIG. 6 depicts a flowchart illustrating an example process 600 for a third-party application to access content within a cloud-based platform in an integrated manner. For example, a user wishes to access or edit content (e.g., a file) stored in a cloud-based environment/platform using a third-party application (e.g., a photo editor, or a word processor).

First, with reference to FIGS. 1, 3-5, the user (e.g., user 316, FIG. 3) selects to open or access the file (e.g., work item 324, FIG. 3) using a user interface (e.g., interface 104, FIG. 1) of the cloud-based environment (e.g., workspace 302, FIG. 3), which can be hosted by a server (e.g., host server 110, FIG. 1). The interface 104 can be generated by an agent application (e.g., a mobile application, or a web application) of the workspace 302 and has access thereto. Then, the user 316 may select which third-party application (e.g., application 120, FIG.1) that the user 316 wants to use. In some embodiments, the selection made available to the user 316 is filtered based on a type of the work item 324. In some embodiments, the selection can be made automatically without user input, or can be made based on a prior input from the user 316, an administrator (e.g., administrator 318, FIG. 3), or from other suitable sources. In some embodiments, the selection menu for selecting which third-party application 120 to launch is a controlled launching interface that is separate from an application launching interface provided by an operating system (OS) of the user 316's devices (e.g., devices 102, FIG. 1; devices 304-314, FIG. 3).

Then, the agent receives a request to access the work item 324 stored in the workspace 302. The request can be made from the third-party application 120, or the file opening process can be made automatic so that no express request from the third-party application 120 is necessary (e.g., the request can be made from OS calls, or from other suitable mechanisms). In all cases, in response to the request to access the work item 324 in the workspace 302, the agent grants (610) access of the work item 324 to the third-party application 120. In some embodiments, the third-party application 120 includes a user interface (e.g., a third-party application toolbar 405 which includes a designated button 410) which is customized to enable storage of the accessed work item 324 back to the workspace 302. In some embodiments, the agent restricts (614) the third-party application 120 to store the accessed work item 324 back to the workspace 302. The restriction can be performed, for example, by an OS level hook, or by other suitable means.

After the third-party application 120 performs accesses or edits to the work item 324, the agent retrieves (620) the work item 324 from the third-party application 120. In some embodiments, the agent deletes (622) copies created by the third-party application 120 during the access. Next, the agent uploads (630) the retrieved work item 324 to the host server 110 that hosts the workspace 302.

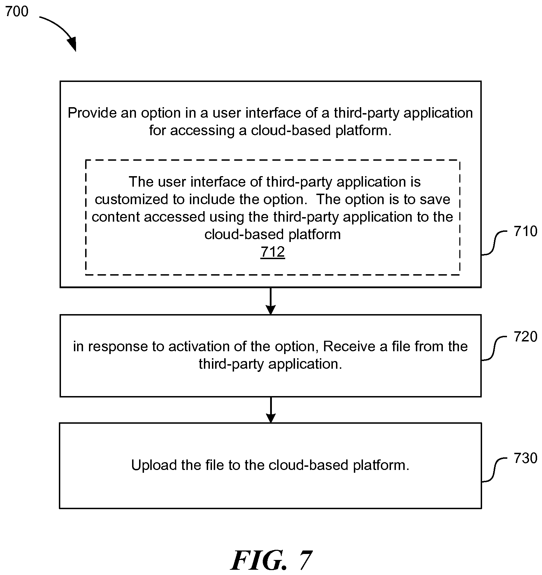

FIG. 7 depicts a flowchart illustrating another example process 700 for a third-party application to access content within a cloud-based platform in an integrated manner. For example, when a user desires to edit and upload a local file to a cloud-based platform.

First, with reference to FIGS. 1, 3-5, an agent application (e.g., a mobile application, or a web application) of the cloud-based platform (e.g., workspace 302, FIG. 3) can provide (710) an option (e.g., option 510, FIG. 5) in a user interface of a third-party application (e.g., application 120, FIG. 1) for accessing the workspace 302. Examples of the providing include any kind of suitable internal or external communication channels between the agent and the third-party application 120 including, for example, an application programming interface (API), a software library, a software framework which the third-party application 120 can adopt, and so forth. In some embodiments, the user interface of third-party application 120 is customized to include the option to save content accessed using the third-party application 120 to the workspace 302, which is hosted by a server (e.g., host server 110, FIG. 1).

Then, in response to activation of the option, the agent receives (720) a file from the third-party application 120. Next, the agent uploads (730) the received file to the host server 110 that hosts the workspace 302. Additionally or alternatively, if the option is activated and if the agent is not present, then a link is presented to the user (e.g., user 316, FIG. 3) to install the agent to handle the uploading.

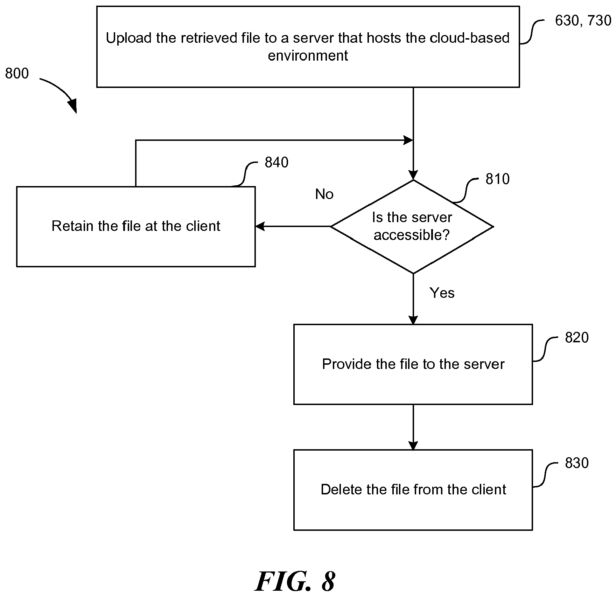

FIG. 8 depicts a flowchart illustrating further details which can be adopted by the processes of FIG. 6 or FIG. 7 in accordance with some embodiments.

Continuing with the examples discussed with respect to processes 600 and 700, in some embodiments, the agent can employ process 800 of FIG. 8 when the agent uploads the retrieved or received file(s) to the host server 110.

First, the agent determines (810) whether the host server 110 hosting the workspace 302 is accessible. If the host server 110 is determined accessible, then the agent transmits (820) the retrieved or received file(s) to the host server 110. In addition, the agent deletes (830) the file the device or from a memory space of the client's user devices 102, 304-314 that stores the file.

On the other hand, if the host server 110 is determined inaccessible, then the agent retains (840) the file on the user device or in the memory space of the client's user devices 102, 304-314 until the host server 110 becomes accessible.

Overall, the techniques disclosed herein provide both accessibility of content within a cloud-based workspace to third-party applications and controllability over the manner of the third-party applications' accesses, thereby allowing the users to enjoy the freedom and benefit of choosing their own preferred programs from a wide-variety of third-party applications while maintaining or enhancing the security of the content stored within the cloud-based workspace.

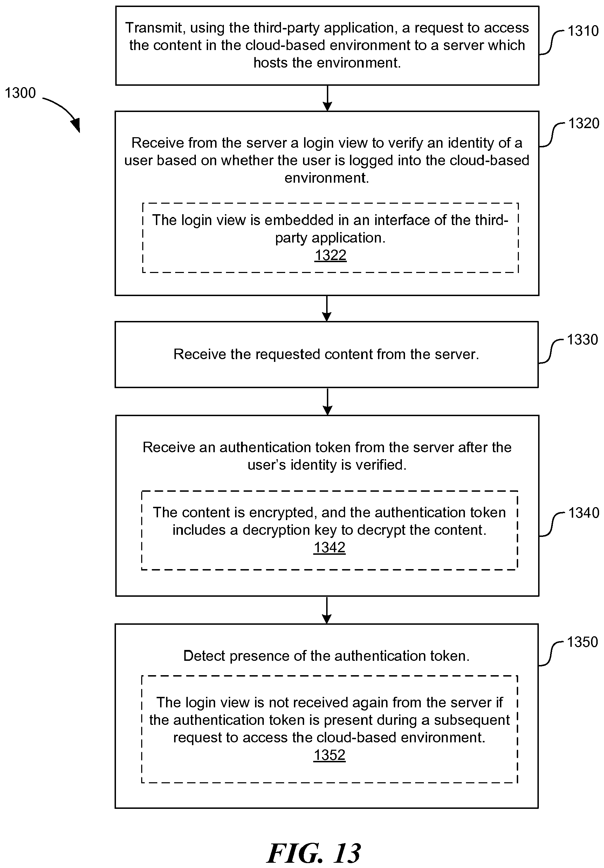

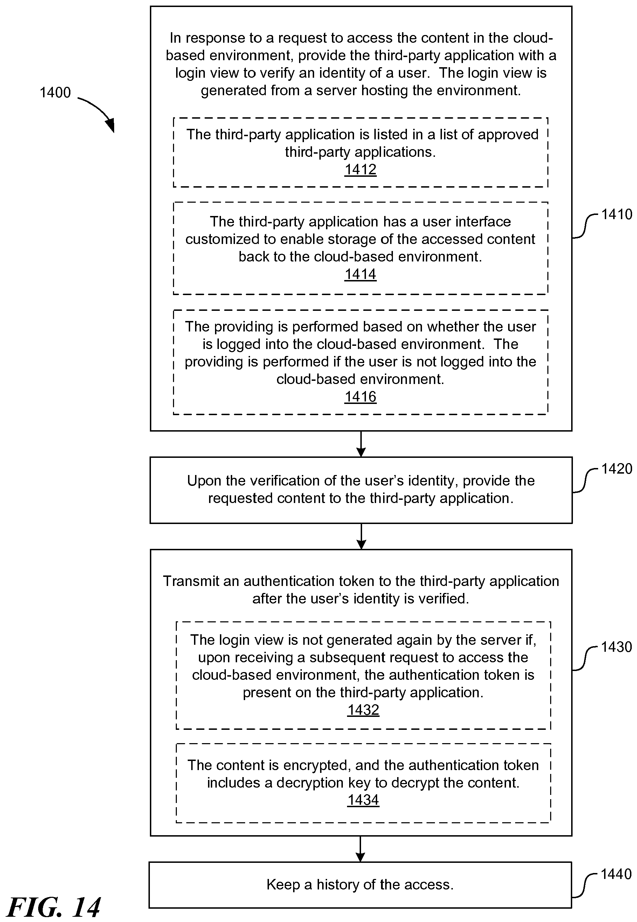

FIG. 13 depicts a flowchart illustrating an example process 1300 which can be performed by a third-party application to gain access to content in a cloud-based environment, and FIG. 14 depicts a flowchart illustrating an example process 1400 which can be performed by a host server for providing the third-party application of FIG. 13 with access to content in a cloud-based environment. With reference to FIGS. 1, 3, 13, and 14, the processes 1300 and 1400 are described.

First, to access content (e.g., work item 324, FIG. 3) in the cloud-based environment (e.g., workspace 302, FIG. 3), a third-party application (e.g., application 120, FIG. 1) can transmit (1310) a request to a server which hosts the workspace 302 (e.g., the host server 110, FIG. 1). In response to such request, the host server 110 can provides (1410) the third-party application 120 with a login view to verify (1410) an identity of a user. The login view is generated (1410) from the host server 110. In one embodiment, the provided login view is embedded (1322) in an interface of the third-party application 120. In some embodiments, the third-party application 120 is listed (1412) in a list of approved third-party applications. The third-party application 120 can also include (1414) a user interface customized to enable storage of the accessed content back to the cloud-based environment.

Further, in some embodiments, the login view is provided (1320, 1416) based on whether the user is logged into the cloud-based environment. According to some embodiments, the login view is provided if the user is not logged into the workspace 302. Depending on the embodiment, either the host server 110 or the third-party application 120 can make the determination as to the user's login status with respect to the cloud-based environment, and can accordingly generate/request the login view.

Then, upon the verification of the user's identity, the host server 110 provides (1420) the requested work item 342 to the third-party application 120. The third-party application 120 receives (1330) the work item 342 to perform one or more actions. In some embodiments, to further security, when the host server 110 determines that it is the third-party application 120 which sends out the request, the host server 110 only responds to such request if the third-party application 120 is listed (1412) in a list of approved third-party applications.

Additionally or alternatively, the host server 110 further transmits (1340, 1430) an authentication token to the third-party application 120 after the user's identity is verified. In some embodiments, the workspace 302 is encrypted (1342, 1434), and the authentication token includes (1342, 1434) a decryption key to decrypt the workspace 302. Some examples of such encryption/decryption algorithms include AES, DES, as well as other suitable cryptologic algorithms. Some implementation of the authentication token can automatically expire after a certain period of time, which may be predetermined, and/or may be dynamically and automatically selected. In some embodiments, the authentication token does not expire over time, and the third-party application 120 can therefore store the authentication token for future use, so that user 316 only needs to authenticate with the third-party application 120 once. The authentication tokens can be deleted, for example, when user 316 logs out, when re-authenticating a user, or when the user removing the third-party application 120 manually.

The third-party application 120 can store the authentication token in a "keychain" or other suitable, secure storage after receiving the authentication token. Then, either the host server 110 or the third-party application 120 or both can detect (1350) presence of the authentication token that is previously sent and still valid. In some embodiments, the login view is not generated again (1352, 1432) by the host server 110 if, upon receiving a subsequent request from the application 120 to access the workspace 302, the authentication token is present on the third-party application 120.

Further, the host server 110 can keep (1440) a history of the access, such as information regarding which third-party application accessed what content. The third-party application can also receive an instruction from the cloud-based environment to delete the received content (e.g., work item 324). The third-party application 120 is restricted to store the received work item 324 back to the workspace 302.

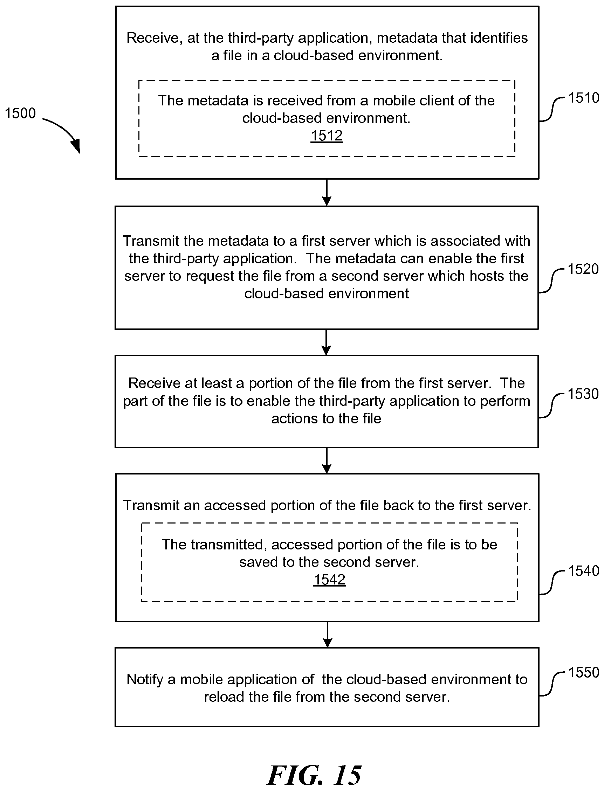

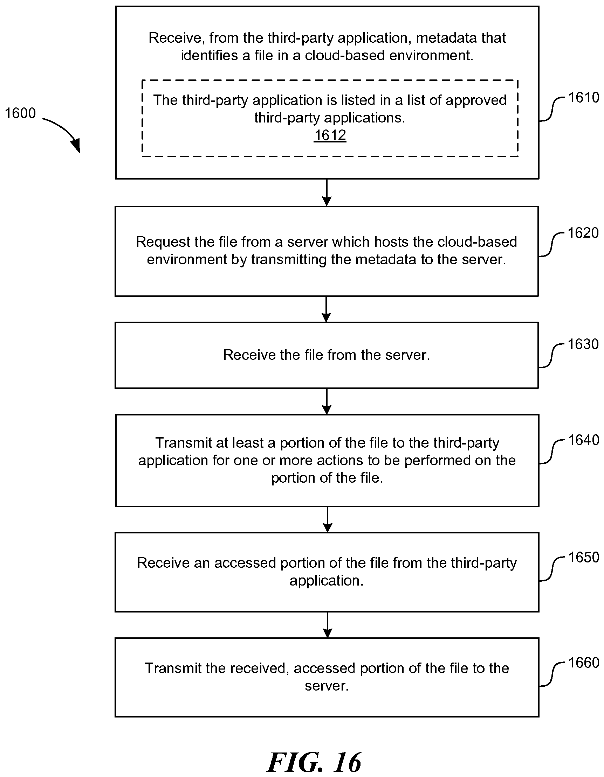

FIG. 15 depicts a flowchart illustrating an example process 1500 which can be performed by a third-party application, through a third-party application server, to gain access to content in a cloud-based environment, and FIG. 16 depicts a flowchart illustrating an example process 1600 which can be performed by the third-party application server of FIG. 15 for providing the third-party application with access to content in a cloud-based environment. With reference to FIGS. 1, 3, 15, and 16, the processes 1500 and 1600 are described.

First, an agent application (e.g., a mobile application, or a web application) of the cloud-based platform (e.g., workspace 302, FIG. 3) can prompt a user (e.g., user 316, or collaborator 322, FIG. 3) to select a file (e.g., work item 324) to access, and select which application (e.g., third-party application 120) to use to access the work item 324.

Upon the user's selection, the mobile application sends metadata that identifies the work item 324 to the third-party application 120. After the third-party application 120 receives (1510) the metadata from the mobile application (1512), the third-party application 120 transmits (1520) the metadata to a third-party application server which is associated to the third-party application 120. The third-party application server receives (1610) the metadata, and transmits (1620) those metadata to request (1620) the work item 324 from the host server 110.

Next, the host server 110 returns the requested work item 324 as identified by the metadata to third-party application server. The third-party application server receives (1630) the requested work item 324 from the host server 110, and then communicates with and/or renders information to the third-party application 120. More specifically, the third-party application server transmits (1640) at least a portion of the file or work item 324 to the third-party application 120. After the third-party application 120 receives (1530) the at least a portion of the work item 324, one or more actions can be performed on the portion of the work item 324 by the third-party application 120. In some embodiments, the part of the work item 324 received by the third-party application 120 includes information that is capable to create a view of at least a partial content of the work item 324. In some embodiments, the part of the work item 324 received by the third-party application 120 includes data that are included the file.

After the access, the third-party application 120 transmits (1540) the work item 324 back to the third-party application server. In some alternative embodiments, the third-party application 120 transmits (1540) only an accessed portion of the work item 324 back to the third-party application server to conserve network resources. The third-party application receives (1650) the accessed portion of the work item 324 from the third-party application 120, and saves (1660, 1542) the accessed file or content back to the host server 110.

The third-party application 120 can also launch/awake/switch to the mobile application and notifies (1550) the mobile application to reload the work item 324 from the host server 110.

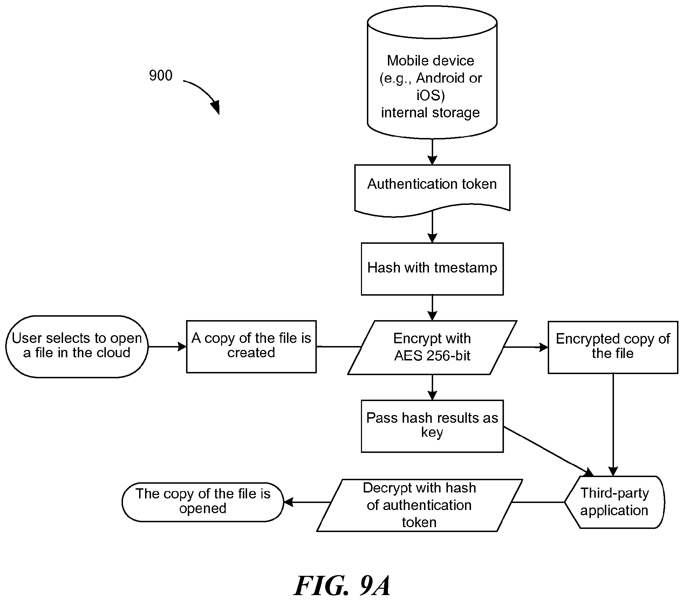

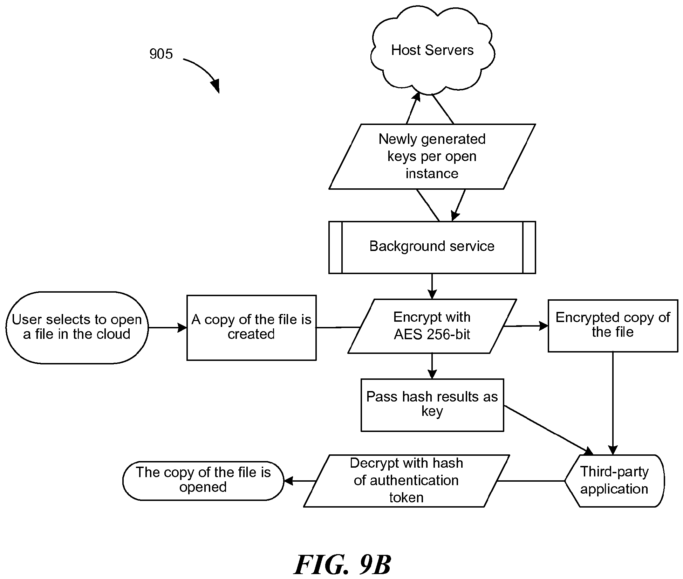

FIGS. 9A and 9B depict two flowcharts respectively illustrating two example processes 900 and 905 which a mobile application of the cloud-based environment can perform so as to provide the file to the third-party application.

Processes 900 and 905 can be employed by the mobile application of the cloud-based environment in the manners described above. More specifically, those embodiments in which the mobile application acts as an agent application in providing the third-party application 120 with access to content in the cloud-based workspace/platform/environment can adopt these processes 900 and/or 905 in enhancing security. Each of the processes 900 and 905 incorporates security enhancing measurements (e.g., AES-256bit, as illustrated in FIGS. 9A and 9B) in a manner described above so that the content within the cloud-based environment can be accessed in a secured way.

First, with reference to FIGS. 3 and 13-14, process 900 is described. If user 316 selects to open a file in the cloud-based environment (e.g., workspace 302, FIG. 3), a copy of the file is created (e.g., by the host server 110) and sent to a mobile application that is operating on a mobile device (e.g., device 304-314 such as an Android device, an iOS device, etc.). Then, an authentication token that is previously received and stored at the mobile device 304 (e.g., via step 1340, FIG. 13) can be used by the mobile application to encrypt the received copy of the file. More specifically, a hash function may be performed on the authentication token so as to create an encryption/decryption key. In some examples, the hash function may be performed with timestamp. The copy of the file can be encrypted using, for example, AES 256-bit or other suitable algorithms along with the result of the hash function. The encrypted file, as well as the result of the hash function as a decryption key, are passed from the mobile application to the third-party application 120. Thereafter, the third-party application 120 can open/edit/otherwise access the file by using the key to decrypt the encrypted copy of the file.

In addition to or as an alternative to process 900, process 905 can be implemented in the embodiments disclosed herein. With reference to FIGS. 3 and 13-14, process 905 is described.

If user 316 selects to open a file in the cloud-based environment (e.g., workspace 302, FIG. 3), a copy of the file is created by the host server 110 and sent to a mobile application. However, instead of using a hashing function with timestamp to create an encryption/decryption key, the mobile application receives a key from the host server 110 upon each open instance, and creates an encrypted copy of the file based on the received key. Then, the encrypted copy of the file, along with the key, are sent to the third-party application 120. Thereafter, the third-party application 120 can access the file by using the key to decrypt the encrypted copy of the file.

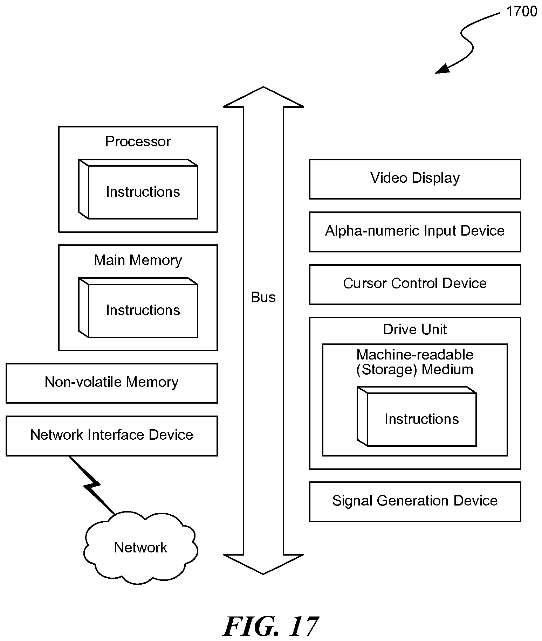

FIG. 17 shows a diagrammatic representation 1700 of a machine in the example form of a computer system within which a set of instructions, for causing the machine to perform any one or more of the methodologies discussed herein, can be executed.

In alternative embodiments, the machine operates as a standalone device or can be connected (e.g., networked) to other machines. In a networked deployment, the machine can operate in the capacity of a server or a client machine in a client-server network environment, or as a peer machine in a peer-to-peer (or distributed) network environment.

The machine can be a server computer, a client computer, a personal computer (PC), a user device, a tablet, a phablet, a laptop computer, a set-top box (STB), a personal digital assistant (PDA), a thin-client device, a cellular telephone, an iPhone, an iPad, a Blackberry, a processor, a telephone, a web appliance, a network router, switch or bridge, a console, a hand-held console, a (hand-held) gaming device, a music player, any portable, mobile, hand-held device, or any machine capable of executing a set of instructions (sequential or otherwise) that specify actions to be taken by that machine.

While the machine-readable medium or machine-readable storage medium is shown in an exemplary embodiment to be a single medium, the term "machine-readable medium" and "machine-readable storage medium" should be taken to include a single medium or multiple media (e.g., a centralized or distributed database, and/or associated caches and servers) that store the one or more sets of instructions. The term "machine-readable medium" and "machine-readable storage medium" shall also be taken to include any medium that is capable of storing, encoding or carrying a set of instructions for execution by the machine and that cause the machine to perform any one or more of the methodologies of the presently disclosed technique and innovation.

In general, the routines executed to implement the embodiments of the disclosure, can be implemented as part of an operating system or a specific application, component, program, object, module or sequence of instructions referred to as "computer programs." The computer programs typically comprise one or more instructions set at various times in various memory and storage devices in a computer, and that, when read and executed by one or more processing units or processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computer-readable media used to actually effect the distribution.

Further examples of machine-readable storage media, machine-readable media, or computer-readable (storage) media include, but are not limited to, recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

The network interface device enables the machine 2800 to mediate data in a network with an entity that is external to the host server, through any known and/or convenient communications protocol supported by the host and the external entity. The network interface device can include one or more of a network adaptor card, a wireless network interface card, a router, an access point, a wireless router, a switch, a multilayer switch, a protocol converter, a gateway, a bridge, bridge router, a hub, a digital media receiver, and/or a repeater.

The network interface device can include a firewall which can, in some embodiments, govern and/or manage permission to access/proxy data in a computer network, and track varying levels of trust between different machines and/or applications. The firewall can be any number of modules having any combination of hardware and/or software components able to enforce a predetermined set of access rights between a particular set of machines and applications, machines and machines, and/or applications and applications, for example, to regulate the flow of traffic and resource sharing between these varying entities. The firewall can additionally manage and/or have access to an access control list which details permissions including for example, the access and operation rights of an object by an individual, a machine, and/or an application, and the circumstances under which the permission rights stand.

Other network security functions can be performed or included in the functions of the firewall, can be, for example, but are not limited to, intrusion-prevention, intrusion detection, next-generation firewall, personal firewall, etc. without deviating from the novel art of this disclosure.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description using the singular or plural number can also include the plural or singular number respectively. The word "or," in reference to a list of two or more items, covers all of the following interpretations of the word: any of the items in the list, all of the items in the list, and any combination of the items in the list.

The above detailed description of embodiments of the disclosure is not intended to be exhaustive or to limit the teachings to the precise form disclosed above. While specific embodiments of, and examples for, the disclosure are described above for illustrative purposes, various equivalent modifications are possible within the scope of the disclosure, as those skilled in the relevant art will recognize. For example, while processes or blocks are presented in a given order, alternative embodiments can perform routines having steps, or employ systems having blocks, in a different order, and some processes or blocks can be deleted, moved, added, subdivided, combined, and/or modified to provide alternative or subcombinations. Each of these processes or blocks can be implemented in a variety of different ways. Also, while processes or blocks are at times shown as being performed in series, these processes or blocks can instead be performed in parallel, or can be performed at different times. Further, any specific numbers noted herein are only examples: alternative implementations can employ differing values or ranges.

The teachings of the disclosure provided herein can be applied to other systems, not necessarily the system described above. The elements and acts of the various embodiments described above can be combined to provide further embodiments.

Aspects of the disclosure can be modified, if necessary, to employ the systems, functions, and concepts of the various references described above to provide yet further embodiments of the disclosure.

These and other changes can be made to the disclosure in light of the above Detailed Description. While the above description describes certain embodiments of the disclosure, and describes the best mode contemplated, no matter how detailed the above appears in text, the teachings can be practiced in many ways. Details of the system can vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features, or aspects of the disclosure with which that terminology is associated. In general, the terms used in the following claims should not be construed to limit the disclosure to the specific embodiments disclosed in the specification, unless the above Detailed Description section explicitly defines such terms. Accordingly, the actual scope of the disclosure encompasses not only the disclosed embodiments, but also all equivalent ways of practicing or implementing the disclosure under the claims.

## Claims

1. A method comprising:
providing a third-party application with access to content in a cloud-based environment;
wherein, the third-party application (120) is hosted by an entity different from that of the cloud-based environment;
wherein the cloud-based environment is hosted by a host server (110) and is a collaboration platform that hosts workspaces (205, 225, 245) with work items (215, 235, 255) that one or more users (208, 214) can access, the collaboration platform being configured to allow multiple users to collaborate efforts on the work items (215, 235, 255);
**characterised in that**:
the third-party application (120) is provided with access to the content in the cloud-based environment by:
the third-party application (120) transmitting a request to access a work item (215, 235, 255) in the cloud-based collaboration environment to the server (110) which hosts the cloud-based collaboration environment;
the host server (110), in response to the request, providing the third-party application (120) with a login view to verify an identity of a user (208, 214), wherein the login view is generated from the host server (110) and embedded in an interface of the third-party application (120); and
the host server (110), upon verification of the user's identity, providing the requested work item (215, 235, 255) to the third-party application (120) whilst the cloud-based environment provides no sharing or saving mechanism to the third-party application other than storage of the requested work item back to the cloud-based environment by means of an operating system level hook restricting said third party application (120), or by an application program interface provided by the cloud-based environment restricting the third-party application (120), or by a software library incorporated into the third-party application (120) restricting the third-party application (120).

2. The method of claim 1, wherein, the access to the content includes previewing the content in the cloud-based environment.

3. The method of claim 1, wherein, the access is provided in response to a request to access the content in the cloud-based environment from a user via a web-interface.

4. The method of claim 3, wherein the request from the user includes a ticket that is configured to automatically expire after a period of time.

5. The method of claim 1, wherein, the access to the content includes collaborating on the content in the cloud-based environment among multiple collaborators (108, 322) of the user (208, 214).

6. The method of claim 1, wherein, the access is provided through a web interface of the third party application.

7. The method of claim 1, wherein, the access is provided through integration of the third-party application (120) with an application program interface, API, or web API provided by the cloud-based environment.

8. The method of claim 7, wherein, the application program interface or the web API is further used for one or more of navigation, file management, file transfer, collaboration in the cloud-based environment.

9. The method of claim 7, wherein, the application program interface or the web API is further used for caching in the cloud-based environment.

10. The method of claim 1, further comprising:
transmitting an authentication token to the third-party application (120) after the user's (208, 214) identity is verified;
wherein the content is encrypted, and wherein the authentication token includes a decryption key to decrypt the content.

11. The method of claim 1, further comprising:
keeping a history of the access, the history including at least information regarding which third-party application (120) accessed what content.

12. The method of claim 1, wherein, the third-party application (120) has a user interface customized to enable storage of the accessed work item (215, 235, 255) back to the cloud-based environment.

13. A system for providing a third-party application (120) to directly access to a file in a cloud-based environment, the system comprising:
one or more processors;
memory circuitry coupled to the processors and having stored thereon instructions which, when executed by at least one of the processors, cause the system to carry out a method as set out in any of claims 1-12.

14. A machine-readable storage medium having stored thereon instructions which, when executed by a processor, cause the processor to carry out a method as set out in any of claims 1-12.

## Patentansprüche

1. Verfahren, umfassend:
Bereitstellen einer Drittanbieter-Anwendung mit Zugang zu Inhalten in einer Cloud-basierten Umgebung,
wobei die Drittanbieter-Anwendung (120) von einer Entität gehostet wird, die sich von der der Cloud-basierten Umgebung unterscheidet; wobei
die Cloud-basierte Umgebung von einem Host-Server (110) gehostet wird und eine Kollaborationsplattform ist, die Arbeitsplätze (205, 225, 245) mit Arbeitsobjekten (215, 235, 255) hostet, auf welche ein oder mehrere Benutzer (208, 214) zugreifen können, wobei die Kollaborationsplattform konfiguriert ist, um es mehreren Benutzern zu ermöglichen, gemeinsam an den Arbeitsobjekten (215, 235, 255) zu arbeiten;
**dadurch gekennzeichnet, dass**
für die Drittanbieter-Anwendung (120) Zugriff auf die Inhalte in der Cloud-basierten Umgebung bereitgestellt wird, indem
die Drittanbieter-Anwendung (120) dem Server (110), der die Cloud-basierte Kollaborationsumgebung hostet, in der Cloud-basierten Kollaborationsumgebung eine Anfrage für den Zugriff auf ein Arbeitsobjekt (215, 235, 255) übermittelt;
der Host-Server (110) als Reaktion auf die Anfrage die Drittanbieter-Anwendung (120) mit einer Login-Ansicht bereitstellt, um die Identität eines Benutzers (208, 214) zu überprüfen, wobei die Login-Ansicht vom Host-Server (110) generiert wird und in eine Schnittstelle der Drittanbieter-Anwendung (120) eingebettet ist; und
der Host-Server (110) nach Überprüfen der Identität des Benutzers das angeforderte Arbeitsobjekt (215, 235, 255) für die Drittanwender-Anwendung (120) bereitstellt, während die Cloud-basierte Umgebung für die Drittanbieter-Anwendung (120) keinen anderen Sharing- oder Speichermechanismus bereitstellt als das Zurückspeichern des angeforderten Arbeitsobjekts mittels eines Betriebssystemebenenhooks, der die Drittanbieter-Anwendung (120) beschränkt, oder durch eine in die Drittanbieter-Anwendung (120) integrierte Softwarebibliothek, die die Drittanbieter-Anwendung (120) beschränkt.

2. Verfahren nach Anspruch 1, wobei der Zugriff auf die Inhalte eine Voransicht der Inhalte in der Cloud-basierten Umgebung umfasst.

3. Verfahren nach Anspruch 1, wobei der Zugriff als Reaktion auf eine Anfrage für den Zugriff auf die Inhalte in der Cloud-basierten Umgebung von einem Benutzer über eine Web-Schnittstelle bereitgestellt wird.

4. Verfahren nach Anspruch 3, wobei die Anfrage des Benutzers ein Ticket umfasst, das konfiguriert ist, um nach einem Zeitraum automatisch abzulaufen.

5. Verfahren nach Anspruch 1, wobei der Zugriff auf die Inhalte ein Zusammenarbeiten von mehreren Mitarbeitern (108, 322) des Benutzers (208, 214) an den Inhalten in der Cloud-basierten Umgebung umfasst.

6. Verfahren nach Anspruch 1, wobei der Zugriff durch eine Web-Schnittstelle der Drittanbieter-Anwendung bereitgestellt wird.

7. Verfahren nach Anspruch 1, wobei der Zugriff durch Integration der Drittanbieter-Anwendung (120) mit einer von der Cloud-basierten Umgebung bereitgestellten Anwendungsprogramm-Schnittstelle, API, oder Web-API bereitgestellt wird.

8. Verfahren nach Anspruch 7, wobei die Anwendungsprogramm-Schnittstelle oder die Web-API weiters für eines oder mehrere aus Navigation, Dateiverwaltung, Dateiübertragung, Zusammenarbeit in der Cloud-basierten Umgebung verwendet wird.

9. Verfahren nach Anspruch 7, wobei die Anwendungsprogramm-Schnittstelle oder die Web-API weiters zum Caching in der Cloud-basierten Umgebung verwendet wird.

10. Verfahren nach Anspruch 1, ferner folgendes umfassend:
Übertragen eines Authentisierungstokens an die Drittanbieter-Anwendung (120), nachdem die Identität des Benutzers (208, 214) überprüft worden ist;
wobei die Inhalte verschlüsselt sind und wobei der Authentisierungstoken einen Entschlüsselungsschlüssel zum Entschlüsseln der Inhalte umfasst.

11. Verfahren nach Anspruch 1, ferner umfassend:
Festhalten eines Zugriffsverlaufs, wobei der Verlauf zumindest Informationen darüber umfasst, welche Drittanbieter-Anwendung (120) auf welche Inhalte zugegriffen hat.

12. Verfahren nach Anspruch 1, wobei die Drittanbieter-Anwendung (120) eine Benutzerschnittstelle aufweist, die kundenspezifisch ist, um ein Zurückspeichern des Arbeitsobjekts (215, 235, 255), auf das zugegriffen worden ist, auf die Cloud-basierte Umgebung zu ermöglichen.

13. System zur Bereitstellung einer Drittanbieter-Anwendung (120) zum Direktzugriff auf eine Datei in einer Cloud-basierten Umgebung, wobei das System folgendes umfasst:
einen oder mehrere Prozessoren;
eine Speicherschaltung, die mit den Prozessoren gekoppelt ist und auf der Befehle gespeichert sind, die, wenn sie von zumindest einem der Prozessoren ausgeführt werden, bewirken, dass das System ein Verfahren nach einem der Ansprüche 1 bis 12 durchführt.

14. Maschinenlesbares Speichermedium, auf dem Befehle gespeichert sind, die, wenn sie von einem Prozessor ausgeführt werden, bewirken, dass der Prozessor ein Verfahren nach einem der Ansprüche 1 bis 12 durchführt.

## Revendications

1. Procédé, comprenant les étapes consistant à :
fournir à une application tierce un accès à un contenu dans un environnement en nuage ;
dans lequel, l'application tierce (120) est hébergée par une entité différente de celle de l'environnement en nuage ;
dans lequel l'environnement en nuage est hébergé par un serveur hôte (110) et est une plateforme de collaboration qui héberge des espaces de travail (205, 225, 245) avec des éléments de travail (215, 235, 255) auxquels un ou plusieurs utilisateurs (208, 214) peuvent accéder, la plateforme de collaboration étant configurée pour permettre à plusieurs utilisateurs des efforts en collaboration sur les éléments de travail (215, 235, 255) ;
**caractérisé en ce que** :
l'application tierce (120) est dotée d'un accès au contenu dans l'environnement en nuage via :
l'application tierce (120) transmettant une demande d'accès à un élément de travail (215, 235, 255) dans l'environnement de collaboration en nuage au serveur (110) qui héberge l'environnement de collaboration en nuage ;
le serveur hôte (110), en réponse à la demande, fournissant à l'application tierce (120) une vue d'ouverture de session pour vérifier une identité d'un utilisateur (208, 214), dans lequel la vue d'ouverture de session est générée à partir du serveur hôte (110) et incorporée dans une interface de l'application tierce (120) ; et
le serveur hôte (110), après vérification de l'identité de l'utilisateur, fournissant l'élément de travail demandé (215, 235, 255) à l'application tierce (120) tandis que l'environnement en nuage ne fournit aucun mécanisme de partage ou d'enregistrement à l'application tierce autre qu'un stockage de l'élément de travail demandé de nouveau dans l'environnement en nuage au moyen d'un crochet de niveau de système d'exploitation restreignant ladite application tierce (120), ou par une interface de programme d'application fournie par l'environnement en nuage restreignant l'application tierce (120), ou par une logithèque incorporée dans l'application tierce (120), restreignant l'application tierce (120).

2. Procédé selon la revendication 1, dans lequel l'accès au contenu inclut la prévisualisation du contenu dans l'environnement en nuage.

3. Procédé selon la revendication 1, dans lequel l'accès est fourni en réponse à une demande d'accès au contenu dans l'environnement en nuage provenant d'un utilisateur via une interface web.

4. Procédé selon la revendication 3, dans lequel la demande provenant de l'utilisateur comprend un ticket qui est configuré pour expirer automatiquement après une période de temps.

5. Procédé selon la revendication 1, dans lequel l'accès au contenu comprend une collaboration sur le contenu dans l'environnement en nuage parmi plusieurs collaborateurs (108, 322) de l'utilisateur (208, 214).

6. Procédé selon la revendication 1, dans lequel l'accès est fourni par l'intermédiaire d'une interface Web de l'application tierce.

7. Procédé selon la revendication 1, dans lequel l'accès est fourni par l'intégration de l'application tierce (120) avec une interface de programme d'application, une API ou une API Web fournie par l'environnement en nuage.

8. l'interface de programme d'application ou l'API Web est en outre utilisée pour un ou plusieurs parmi une navigation, une gestion de fichiers, un transfert de fichiers, et une collaboration dans l'environnement en nuage.

9. Procédé selon la revendication 7, dans lequel l'interface de programme d'application ou l'API Web est en outre utilisée pour la mise en cache dans l'environnement en nuage.

10. Procédé selon la revendication 1, comprenant en outre :
la transmission d'un jeton d'authentification à l'application tierce (120) après que l'identité de l'utilisateur (208, 214) ait été vérifiée ;
dans lequel le contenu est chiffré, et dans lequel le jeton d'authentification comprend une clé de déchiffrement pour déchiffrer le contenu.

11. Procédé selon la revendication 1, comprenant en outre :
la conservation d'un historique de l'accès, l'historique comprenant au moins des informations concernant quelle application tierce (120) a accédé à quel contenu.

12. Procédé selon la revendication 1, dans lequel l'application tierce (120) a une interface utilisateur personnalisée pour permettre le stockage de l'élément de travail consulté (215, 235, 255) à nouveau dans l'environnement en nuage.

13. Système pour fournir une application tierce (120) pour accéder directement à un fichier dans un environnement en nuage, le système comprenant :
un ou plusieurs processeurs ;
un ensemble de circuits de mémoire couplé aux processeurs et ayant des instructions stockées dessus qui, lorsqu'elles sont exécutées par au moins l'un des processeurs, amènent le système à mettre en oeuvre un procédé selon l'une quelconque des revendications 1 à 12.

14. Support de stockage lisible par une machine sur lequel sont stockées des instructions qui, lorsqu'elles sont exécutées par un processeur, amènent le processeur à mettre en oeuvre un procédé selon l'une quelconque des revendications 1 à 12.
